# FASCICULE DE BREVET EUROPEEN

(11) **EP 0 570 272 B1**
(45) Date de publication et mention de la délivrance du brevet: **12.03.1997**
(21) Numéro de dépôt: 93401197.4
(22) Date de dépôt: 11.05.1993
(51) Int. Cl.: F16L 3/22, H02G 3/04

(54) **Goulotte de câblage permettant une disposition des câbles en nappes**
Kabelkanal zum Verlegen von Kabeln in mehreren Lagen
Cable duct allowing a layered cable arrangement

(30) Priorité: 12.05.1992 FR 9205741
(43) Date de publication de la demande: 18.11.1993
(73) Titulaire: PLANET-WATTOHM, 60300 Senlis (FR)
(72) Inventeur: Laigle, Jean, F-93700 Drancy (FR)
(74) Mandataire: CABINET BONNET-THIRION

(56) Documents cités:
- DE-A- 2 714 885
- DE-U- 1 843 667
- FR-A- 1 375 765
- FR-A- 1 505 517

## Description

L'invention se rapporte à une goulotte de câblage, notamment pour câbles électriques et concerne plus particulièrement un agencement nouveau des découpes d'accès de celle-ci, permettant d'obtenir une disposition des câbles en une ou plusieurs nappes.

On connaît une goulotte de câblage en matière plastique, constituée d'un profilé à section transversale globalement en forme de U et présentant de ce fait une ouverture longitudinale s'étendant continûment sur sa longueur. Cette ouverture longitudinale est destinée à être fermée, à la fin du câblage par un couvercle constitué par un autre profilé en matière plastique. La goulotte est destinée à être fixée dans des coffrets ou armoires électriques ou le long d'un mur ou installée dans la structure d'un faux-plafond, par exemple. Cette goulotte comporte en outre des ouvertures ou découpes sur ses deux parois parallèles, pour permettre d'introduire et/ou de faire sortir des câbles à des endroits choisis le long du chemin de câblage.

Dans la pratique, il est souhaitable d'avoir accès à des câbles se trouvant à plusieurs niveaux dans la goulotte et de disposer de plusieurs niveaux d'entrée ou de sortie pour différents câbles ou types de câbles. On peut ainsi obtenir une sorte de "nappage" des entrées et sorties latérales de câbles, offrant un câblage à la fois plus "clair" et fiable.

Le document DE-U-1843667 décrit une goulotte de câblage dont les faces parallèles sont munies de découpes conformées de telle façon que les conducteurs puissent entrer ou sortir de la goulotte à différents niveaux. Cependant, le positionnement de ces conducteurs est difficile et instable. L'invention permet de surmonter de telles difficultés.

L'invention concerne donc une goulotte de câblage comportant un profilé à section transversale globalement en forme de U et munie de découpes pratiquées sur ses parois parallèles pour permettre le passage de câbles et leur agencement en nappes, chaque découpe comportant au moins une partie allongée s'étendant longitudinalement à une distance choisie de la base de ladite goulotte pour permettre la formation d'une nappe de conducteurs et communiquant avec une autre partie s'étendant à une autre distance de la base de la goulotte, ces découpes étant définies régulièrement sur toute la longueur dudit profilé, caractérisée en ce que lesdites découpes forment des ouvertures à contours fermés dans lesdites parois parallèles et en ce que ladite partie allongée de chaque découpe (21a, 21b - 21c, 21d) communique avec le reste de celle-ci par un rétrécissement (24 - 24a) permettant d'isoler les accès aux différentes nappes tout en permettant une communication entre celles-ci.

L'invention sera mieux comprise et d'autres avantages de celle-ci apparaîtront plus clairement à la lumière de la description qui va suivre de plusieurs modes de réalisation possibles d'une goulotte de câblage conforme à son principe, donnée uniquement à titre d'exemple et faite en référence aux dessins annexés dans lesquels:
- la figure 1 est une vue partielle en perspective d'une goulotte de câblage conforme à l'invention;
- la figure 2 est une vue analogue à la figure 1 illustrant une variante avec une autre configuration des découpes; et
- la figure 3 est une vue analogue à la figure 1, illustrant encore une autre variante plus particulièrement adaptée pour une goulotte de faible hauteur.

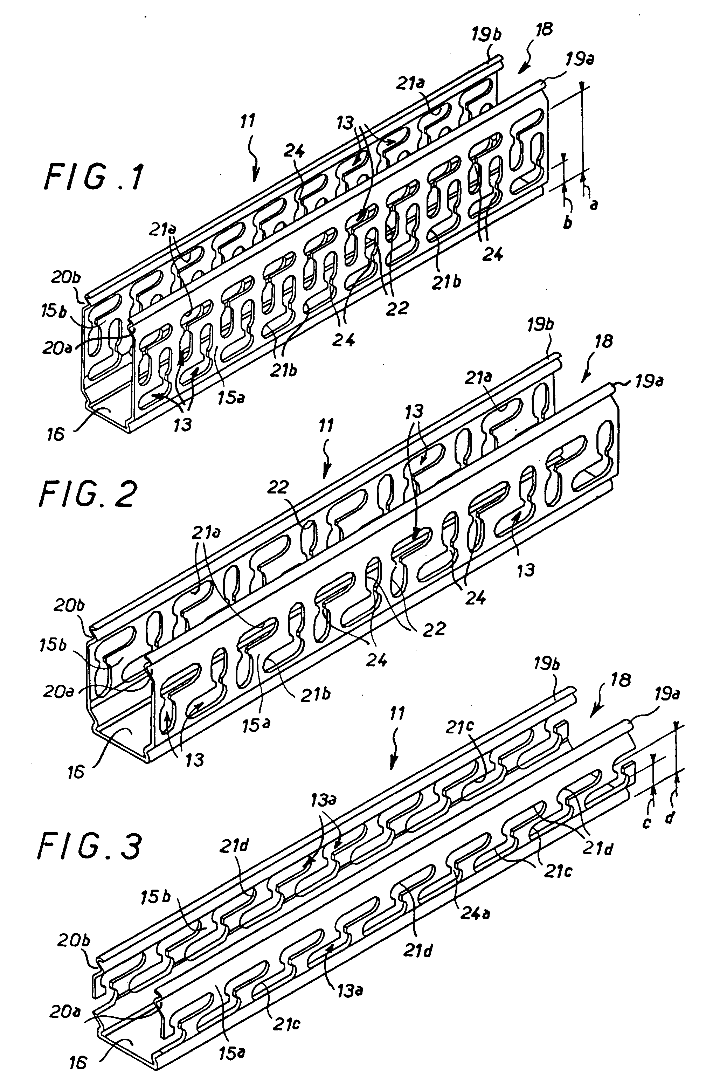

En se reportant plus particulièrement à la figure 1, on a représenté une goulotte de câblage 11, ici en matière plastique. Cette goulotte est un profilé à section transversale globalement en forme de U et muni de découpes 13 pratiquées sur ses deux parois parallèles 15a, 15b. Ces deux parois parallèles s'étendent à partir d'une paroi de fond 16 définissant, en section transversale, la base du U. L'ouverture longitudinale continue 18, délimitée par les deux bords libres 19a, 19b des parois 15a et 15b, est destinée à être coiffée par un couvercle, non représenté, venant s'emboîter sur lesdites parois parallèles. La goulotte comporte en outre deux gorges longitudinales externes 20a, 20b s'étendant au voisinage des bords de l'ouverture 18, légèrement en retrait de celle-ci. Ces gorges sont plus particulièrement adaptées à recevoir les bords du couvercle emboîté à force.

Selon l'invention, certaines au moins des découpes 13 pratiquées sur les deux parois 15a, 15b comportent, chacune, au moins une partie allongée 21a, 21b s'étendant longitudinalement à une distance choisie (a, b respectivement) de la base ou paroi de fond 16 de ladite goulotte et cette partie allongée longitudinalement communique avec une autre partie 22 orientée différemment. Dans l'exemple, les deux parties sont essentiellement perpendiculaires l'une par rapport à l'autre, de façon que ladite découpe ait globalement la forme d'un L, éventuellement inversé, éventuellement renversé.

Les découpes décrites ci-dessus sont définies régulièrement, à espacement constant, sur toute la longueur dudit profilé.

Selon un agencement préféré, la partie allongée 21a ou 21b définie ci-dessus communique avec le reste de la découpe par un rétrécissement 24. Ainsi, il apparaît clairement, en considérant la figure 1, que la disposition côte-à-côte de telles découpes définit au moins une nappe de sortie de câbles, à une distance prédéterminée de la base du profilé. Dans l'exemple, on peut créer deux telles "nappes" à des distances a, b, respectivement de la paroi de fond 16. Ces nappes résultent de l'alignement desdites parties allongées d'au moins certaines desdites découpes. Pour obtenir les deux nappes, les découpes sont imbriquées tête-bêche deux à deux et le motif, constitué par deux telles découpes imbriquées est régulièrement répété longitudinalement sur toute la longueur du profilé.

Dans l'exemple de la figure 1, les parties allongées longitudinalement permettent de définir deux nappes assez éloignées au niveau de chaque paroi 15, de sorte que les autres parties 22 desdites découpes s'étendent entièrement entre les deux nappes.

En revanche, dans le cas de la figure 2, qui convient pour une goulotte de moindre hauteur, les parties allongées longitudinalement sont davantage espacées pour permettre d'intercaler entre elles d'autres parties 22 "verticales" de découpes.

Enfin, dans le mode de réalisation de la figure 3, chaque découpe 13a comporte deux parties allongées longitudinalement précitées 21c, 21d, s'étendant longitudinalement à des distances différentes (c, d, respectivement) de la base de la goulotte et ces deux parties allongées communiquent entre elles, essentiellement ici par un rétrécissement 24a orienté différemment. Les deux parties allongées sont décalées longitudinalement et définissent, comme précédemment, deux niveaux ou nappes d'entrées et de sorties de câbles.

Comme mentionné précédemment, les découpes telles que représentées dans les modes de réalisation qui viennent d'être décrits, sont des ouvertures fermées mais on peut très bien envisager que certaines au moins de ces découpes soient prolongées jusqu'au bord de la paroi 15 correspondante par une fente, pour faciliter l'insertion des câbles dans la goulotte.

Sur les figures 1 et 2, il apparaît également qu'en plus des deux nappes des câbles définies par les parties 21a, 21b s'étendant longitudinalement, une zone d'accès intermédiaire se trouve définie, entre elles, créée par les autres parties 22 "verticales" des découpes. Si on introduit un câble dans la zone intermédiaire on peut l'y maintenir ou le faire descendre soit dans la nappe inférieure, soit dans la nappe supérieure. Inversement, si on introduit un câble dans l'une des nappes on peut le faire passer à la zone intermédiaire. Dans l'exemple de la figure 3, on peut faire passer un câble d'une "nappe" à l'autre.

## Revendications

1. Goulotte de câblage comportant un profilé à section transversale globalement en forme de U et munie de découpes pratiquées sur ses parois parallèles pour permettre le passage de câbles et leur agencement en nappes, chaque découpe comportant au moins une partie allongée (21a, 21b - 21c, 21d) s'étendant longitudinalement à une distance choisie de la base de ladite goulotte pour permettre la formation d'une nappe de conducteurs et communiquant avec une autre partie (22 - 21d, 21c) s'étendant à une autre distance de la base de la goulotte, ces découpes étant définies régulièrement sur toute la longueur dudit profilé, caractérisée en ce que lesdites découpes forment des ouvertures à contours fermés dans lesdites parois parallèles et en ce que ladite partie allongée de chaque découpe (21a, 21b - 21c, 21d) communique avec le reste de celle-ci par un rétrécissement (24 - 24a) permettant d'isoler les accès aux différentes nappes tout en permettant une communication entre celles-ci.

2. Goulotte de câblage selon la revendication 1, caractérisée en ce que, pour chaque découpe, ladite partie allongée (21a, 21b) s'étendant longitudinalement et ladite autre partie (22) sont essentiellement perpendiculaires l'une par rapport à l'autre de façon que ladite découpe dans son ensemble ait globalement la forme d'un L, éventuellement inversé, éventuellement renversé.

3. Goulotte de câblage selon l'une des revendications précédentes, caractérisée en ce que lesdites découpes (13) sont imbriquées tête-bêche deux à deux, le motif constitué par deux telles découpes imbriquées étant régulièrement répétées longitudinalement sur toute la longueur dudit profilé.

4. Goulotte de câblage selon la revendication 1, caractérisée en ce que chaque découpe (13a) comporte deux telles parties allongées (21c, 21d) s'étendant longitudinalement à des distances différentes de la base de ladite goulotte et en ce que lesdites parties allongées communiquent entre elles.

5. Goulotte de câblage selon la revendication 4, caractérisée en ce que les deux parties allongées (21c, 21d) sont décalées longitudinalement et communiquent entre elles essentiellement par ledit rétrécissement (24a).

## Patentansprüche

1. Verkabelungsrinne, die ein Profilteil mit im wesentlichen U-förmigem Querschnitt aufweist und auf ihren parallelen Wänden zur Durchführung von Kabeln und zu deren Anordnung in Schichten mit Ausschnitten versehen ist, deren jeder mindestens einen langgestreckten Teil (21a, 21b - 21c, 21d) aufweist, der sich in Längsrichtung in einem bestimmten Abstand von der Basis der Rinne erstreckt, um die Bildung einer Schicht von Leitern zu gestatten, und der mit einem anderen Teil (22 - 21d, 21c) verbunden ist, der sich in einem anderen Abstand von der Basis der Rinne erstreckt, wobei diese Ausschnitte regelmäßig auf der ganzen Länge des Profilteils angeordnet sind, dadurch gekennzeichnet, daß diese Ausschnitte in den parallelen Wänden Öffnungen mit geschlossenem Umriß bilden und daß der langgestreckte Teil (21a, 21b - 21c, 21d) jedes Ausschnitts mit dessen Rest über eine Verjüngung (24 - 24a) verbunden ist, die die Isolierung der Zugänge zu den einzelnen Schichten und gleichzeitig eine Verbindung zwischen diesen gestattet.

2. Verkabelungsrinne nach Anspruch 1, dadurch gekennzeichnet, daß bei jedem Ausschnitt der sich in Längsrichtung erstreckende langgestreckte Teil (21a, 21b) und der andere Teil (22) im wesentlichen zueinander senkrecht sind, so daß der Ausschnitt insgesamt die Form eines L hat, das gegebenenfalls verkehrt oder umgekehrt ist.

3. Verkabelungsrinne nach einem der vorhergehenden Ansprüche, dadurch gekennzeichnet, daß die Ausschnitte (13) paarweise umgekehrt zueinander verschachtelt sind, wobei sich das von zwei solchen verschachtelten Ausschnitten gebildete Muster in Längsrichtung auf der ganzen Länge des Profilteils regelmäßig wiederholt.

4. Verkabelungsrinne nach Anspruch 1, dadurch gekennzeichnet, daß jeder Ausschnitt (13a) zwei solche langgestreckten Teile (21c, 21d) besitzt, die sich in Längsrichtung in verschiedenen Abständen von der Basis der Rinne erstrecken, und daß die langgestreckten Teile miteinander verbunden sind.

5. Verkabelungsrinne nach Anspruch 4, dadurch gekennzeichnet, daß die beiden langgestreckten Teile (21c, 21d) in Längsrichtung versetzt sind und im wesentlichen über die Verjüngung (24a) miteinander verbunden sind.

## Claims

1. A cabling channel comprising a shaped member of generally U-shaped cross-section and provided with openings on its parallel walls to permit the passage of cables and the arrangement thereof in layers, each opening comprising at least one elongate portion (21a, 21b - 21c, 21d) extending longitudinally at a selected distance from the base of said channel to permit the formation of a layer of conductors and communicating with another portion (22 - 21d, 21c) extending at another distance from the base of the channel, said openings being defined regularly over the entire length of said shaped member, characterised in that said openings form apertures with closed contours in said parallel walls and that said elongate portion of each opening (21a, 21b - 21c, 21d) communicates with the remainder thereof by way of a constriction (24 - 24a) making it possible to isolate the accesses to the different layers while permitting a communication between them.

2. A cabling channel according to claim 1 characterised in that, for each opening, said elongate portion (21a, 21b) which extends longitudinally and said other portion (22) are substantially perpendicular relative to each other so that said opening overall is in the general shape of an L which is possibly inverted and possibly reversed.

3. A cabling channel according to one of the preceding claims characterised in that said openings (13) are overlapped in head-to-tail relationship in twos, the pattern formed by two such overlapped openings being regularly repeated longitudinally over the entire length of said shaped member.

4. A cabling channel according to claim 1 characterised in that each opening (13a) comprises two such elongate portions (21c, 21d) which extend longitudinally at different distances from the base of said channel and that said elongate portions communicate with each other.

5. A cabling channel according to claim 4 characterised in that the two elongate portions (21c, 21d) are displaced longitudinally and communicate with each other substantially by way of said constriction (24a).
